**Europäisches Patentamt**

**European Patent Office**

**Office européen des brevets**

(19)

(11) Veröffentlichungsnummer: **0 100 886**
**A1**

# (12) EUROPÄISCHE PATENTANMELDUNG

(21) Anmeldenummer: **83106712.9**

(22) Anmeldetag: **08.07.83**

(51) Int. Cl.³: **D 06 B 19/00**

(30) Priorität: **17.07.82 DE 3226904**

(43) Veröffentlichungstag der Anmeldung:
**22.02.84 Patentblatt 84/8**

(84) Benannte Vertragsstaaten:
**AT CH FR GB IT LI NL**

(71) Anmelder: **Mitter, Mathias**
**Falkenstrasse 57**
**D-4815 Schloss Holte(DE)**

(72) Erfinder: **Mitter, Mathias**
**Falkenstrasse 57**
**D-4815 Schloss Holte(DE)**

(74) Vertreter: **Stracke, Alexander, Dipl.-Ing. et al,**
**Patentanwälte Dipl.-Ing. Loesenbeck Dipl.-Ing. Stracke**
**Jöllenbecker Strasse 164 Postfach 5605**
**D-4800 Bielefeld 1(DE)**

(54) Auftragsvorrichtung.

(57) 1. Auftragsvorrichtung für verschäumte Auftragsmedien.

2. Bei der Auftragsvorrichtung für verschäumte Auftragsmedien befindet sich im Inneren oder auf der Schablone ein geschlossener Hohlkörper, der schlitzartig zur Auftragsebene geöffnet ist. Er hat somit einen Auftragsschlitz. Der Hohlkörper ist dichtend ausgebildet bzw. ist entsprechend abgeschlossen wie ein dichtend aufbringbarer Deckel od. dgl. In diesem Hohlkörper soll sich eine unter Druck stehende Luftblase bilden. Diese Luft wird entweder zugeführt als Druckluft oder sie entsteht durch Einfüllen bzw. kontinuierliches Einfüllen des verschäumten Auftragsmediums. Die Druckluft oder ein anderes gasförmiges Medium wird in ihrem Druck eingestellt und treibt entweder aktiv das verschäumte Medium durch den Auftragsschlitz und eine Schablone auf die Ware oder beeinflußt die kontinuierliche Schaumzuführung. Sie wirkt dann als Feder. Zu diesem Zweck ist die Druckluftbetriebseinheit oder eine entsprechende Meßvorrichtung mit der Fördervorrichtung für das verschäumte Medium verbunden. Die Vorrichtungen beeinflussen sich entsprechend dem Betriebszustand.

Fig.4

9/5

Mathias Mitter, Falkenstr. 57, 4815 Schloß Holte

Auftragsvorrichtung

---

Die Erfindung betrifft eine Auftragsvorrichtung für verschäumte Auftragsmedien im Inneren oder auf einer Schablone od.dgl. entsprechend dem Gattungsbegriff des Anspruches 1.

So ist in der DE-OS 30 34 804 eine derartige Auftragsvorrichtung dargestellt und beschrieben. Diese bekannte
Vorrichtung ermöglicht jedoch nicht, das verschäumte
Auftragsmedium unter genau kontrolliertem Druck aus dem
Auftragsschlitz herauszudrücken, um einen absolut gleichmäßigen Auftrag zu erzielen.

Der im Kennzeichen des Anspruches 1 angegebenen Erfindung
liegt somit die Aufgabe zugrunde, eine derartige Auftragsvorrichtung zu schaffen, mit der der Schaum unter kontrolliertem Druck aus dem Auftragsschlitz herausdrückbar ist,
um einen gleichmäßigen Auftrag des Schaumes auf die Ware
zu erzielen.

Mit der Auftragsvorrichtung nach der Erfindung ist es nun
möglich, entweder den Schaum aktiv unter genau einstellbarem Druck im Luftpolster oder in der Luftblase aus dem
Hohlkörper herauszudrücken, wobei es gleichgültig ist,
wie weit der Hohlkörper gefüllt ist, oder den ständig gleichmäßig gefüllten Hohlkörper unter einem kontrollierten Druck zu halten, so daß, wenn z.B. zu viel Druck in der Schaumleitung ist, das Luftpolster zunächst als Federung wirkt und bei Überschreitung eines Wertes die Pumpe des Schaumgenerators od.dgl. entsprechend einstellt, so daß der Druck in der Schaumleitung abfällt. Damit ist es möglich, mit einem genau eingestellten Druck die Auftragsvorrichtung arbeiten zu lassen. Das Luftpolster oder die Luftblase bildet somit das Regulativ, um im Austrittsbereich, nämlich im Schlitzbereich.und damit in der Auftragsebene einen gleichmäßigen Auftragsdruck des Mediums auf dem Substrat zu erzielen.

Weitere vorteilhafte Ausgestaltungen einer Auftragsvorrichtung sind durch die Unteransprüche gekennzeichnet.

Der Begriff "Schablone" ist nicht einschränkend zu verstehen, es kann sich um eine gemusterte oder ungemusterte Schablone handeln, um ein Sieb, ein Siebgewebe od.dgl. Die Schablone oder das Sieb können rotieren oder stillstehen. Bei stillstehendem Sieb oder Schablone bewegt sich die Auftragsvorrichtung. Eine Gegenbewegung zwischen Sieb und Auftragsvorrichtung ist auch möglich.

Als Substrat kommen im wesentlichen Textilien infrage, Florware, Teppiche u.dgl. Es ist auch ein Auftrag auf Papier, Folie, Non-woven u.dgl. möglich.

Die verschäumte Flotte kann aus den unterschiedlichsten Chemikalien bestehen. Zunächst ist an den Auftrag von Farbe gedacht bzw. an Farbflotte oder an den Auftrag von Flotte mit Farbstoff zum Drucken oder Färben. Es kann aber auch Latexschaum aufgetragen werden oder eine andere Schicht auf die Ware. Die Warenbahn kann auch durch den Schaum behandelt werden, z.B. durch verschäumte Ausrüstungschemikalien bzw. auch Waschchemikalien.

Die Gesamtvorrichtung kann einer Siebdruckmaschine gleichen bzw. es können siebdruckähnliche Maschinen zum Einsatz gelangen, deren Konstruktion an sich bekannt ist.

Verschiedene Ausführungsbeispiele der Erfindung werden anhand der Fig. 1 bis 6 erläutert. Es zeigen:

Fig. 1         eine Auftragsvorrichtung für ebene Siebschablonen in Seitenansicht,

Fig. 2         eine Draufsicht auf die Vorrichtung nach dem
               Schnitt II - II der Fig. 1,

Fig. 3         einen Schnitt durch die Vorrichtung nach
               Linie III - III der Fig. 2,

Fig. 4-6       Auftragsvorrichtungen in rotierenden Scha-
               blonen bzw. Siebzylindern mit unterschied-
               licher Ausführung.

Wie die Figuren zeigen, kann die Auftragsvorrichtung 1 sehr unterschiedlich gestaltet sein.

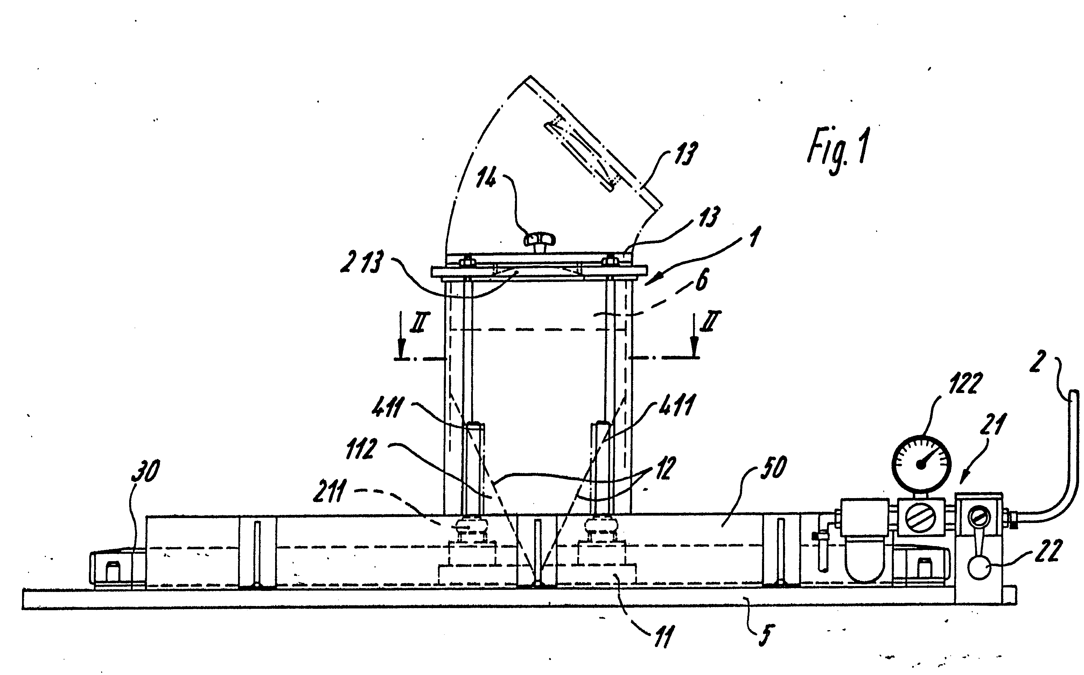

Beim Ausführungsbeispiel der Fig. 1 bis 3 besteht die Auftragsvorrichtung zunächst aus einem zylindrischen Hohlkörper 10, der aus Glas bestehen kann. Dieser zylindrische Hohlkörper stützt sich auf einer Bodenplatte 11 ab, die einen Auftragsschlitz 111 bildet. Im Inneren des Hohlkörpers 10 befinden sich Schrägflächen oder schrägflächenbildende Teile 12, die im Winkel zueinanderstehen und im oberen Bereich des Auftragsschlitzes 111 münden. Um die Schrägflächen 12 zu erzielen, können entsprechend geformte Füllkörper in den zylindrischen Hohlkörper 10 gebracht werden.

Der Hohlkörper 10, der eine senkrecht stehende Zylinderform aufweisen kann, wird im oberen Bereich durch einen Deckel 13 verschlossen, der über Dichtungen 113 sich auf einem Kranz 110 des Hohlkörpers 10 abstützt. Dieser Deckel wird auf dem Kranz 110 durch Schrauben 14 festgelegt. Der Deckel trägt eine Druckluftzuleitung 2, vorzugsweise mittig, und an seiner Unterseite im Abstand zur Unterseite des Deckels gehalten, eine kalottenförmige oder spitzkegelige Verteilungsscheibe 213, so daß die für die Druckluftleitung 2 zugeführte Druckluft nicht mittig im Hohlkörper 10 zur Wirkung gelangt, sondern im Inneren des Hohlkörpers 10 gleichmäßig verteilt ist. Der Hohlkörper hat bei der dargestellten Ausführungsform Zylinderform und die Verteilungsscheibe 213 ist somit rund ausgebildet. Zwischen der Peripherie der Verteilungsscheibe 213 und der Innenwandfläche 210 des Hohlkörpers 10 gelangt nun die Druckluft in das Innere der Auftragsvorrichtung 1.

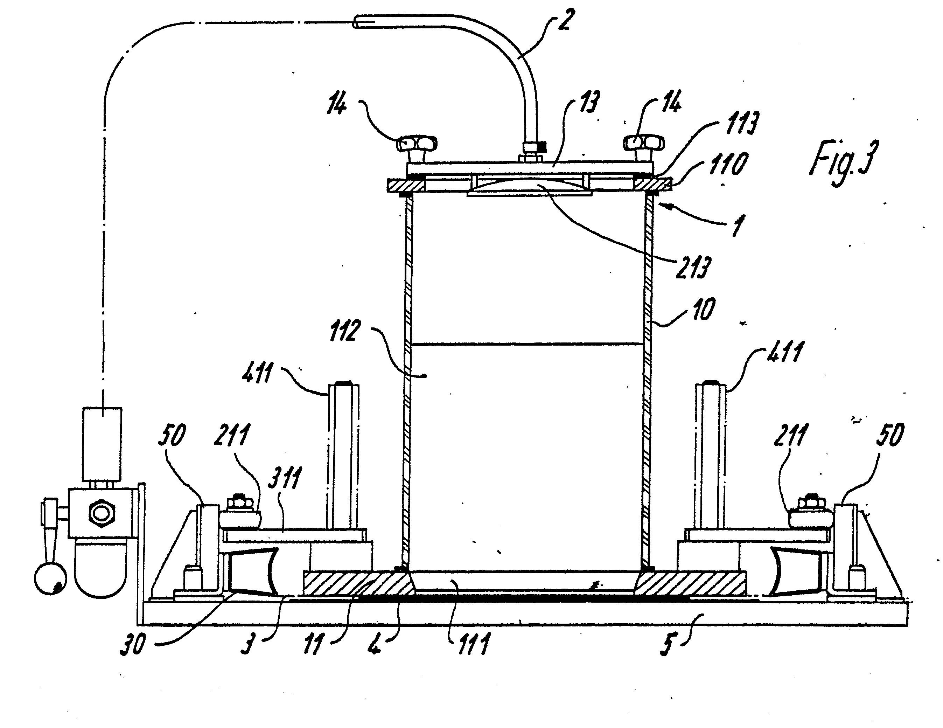

Die Bodenplatte selbst liegt auf einer ebenen Siebschablone 3 auf, unter der sich die Ware 4 befindet (Fig. 3). Sie ist hier als Florware dargestellt und liegt auf einem Arbeitstisch 5 auf.

Die Siebschablone 3 hat in an sich bekannter Weise einen Rahmen 30, der auf dem Arbeitstisch 5 in an sich bekannter Weise festlegbar ist. Seitlich zum Schablonenrahmen 30 liegen Führungsleisten 50, an denen die Bodenplatte 11 der Auftragsvorrichtung 10 über horizontal liegende Rollen 211 geführt ist, die an Armen 311 befestigt sind. Dies ist nur ein Ausführungsbeispiel des Einsatzes einer derartigen Auftragsvorrichtung.

Ob nun der Hohlkörper hohlzylindrisch ist oder eine andere Hohlsäulenform aufweist, ist gleichgültig, die Zylinderform hat nur den Vorteil einer gleichmäßigen Verteilung und Zuführung zum Auftragsschlitz 111.

Der Druckluftanschluß 20 kann von jedem drucklufterzeugenden Gerät kommen. Eine Druckluftbetriebseinheit 21 ist vorgesehen mit Einstellvorrichtung 22, um den gewünschten Druck zu geben, der am Druckluftmesser 122 für die Bedienungsperson jeweils ablesbar ist.

Die Arbeitsweise der Vorrichtung ist folgende:

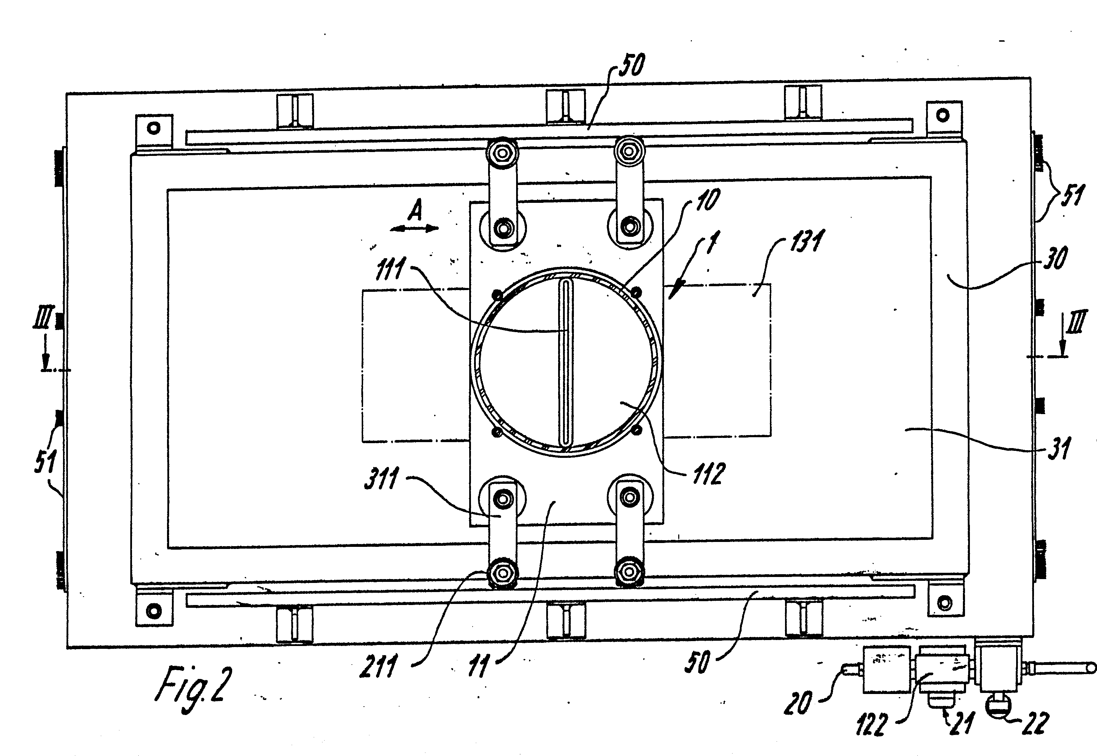

Von einem nicht dargestellten Schaumgenerator, der eine beliebige Flotte aufschäumt, beispielsweise wie es in der DE-OS 25 23 062 dargestellt und beschrieben ist, wird Schaum in den Hohlkörper 10 eingebracht, nachdem vorher der Deckel 13 geöffnet wurde. Beim Einfüllen steht die Vorrichtung vorzugsweise auf nichtdurchlässigen Flächen 31 der Schablone. Ist der Behälter zu einem großen Teil mit Schaum gefüllt, wie es in Fig. 1 dargestellt ist, wird der Deckel 13 geschlossen, festgeschraubt und anschließend wird Druckluft in das Innere des Behälters gegeben, und zwar in die vorher freigelassene Luftblase 6. Dadurch, daß die Druckluft gleichmäßig verteilt wird durch die Verteilungsscheibe 213, bildet sich in der Mitte der Schaumeinfüllung keine Vertiefung, sondern der Schaum wird allmählich mit dem eingestellten Druck auf die Unterlage gepreßt. Da der Schaum den Auftragsschlitz 111 abdeckt und bis zu diesem Auftragsschlitz die Druckluft nicht gelangen kann, ist der Behälter zunächst geschlossen. Wird dann anschließend in einer der Pfeilrichtungen A (Fig. 2) die Auftragsvorrichtung 1 verschoben von Hand oder maschinell, so gelangt der Austrittsquerschnitt des Auftragsschlitzes 111 auf den perforierten Bereich 131. der Schablone bzw. der Schablonengaze und der Schaum durchdringt diesen perforierten Bereich mit dem gewünschten Flächendruck. Der Schaum gelangt über die Siebschablone in die Ware und dringt in diese ein, so daß auch hochflorige Ware vollständig durchgefärbt oder durchgemustert wird.

Es genügt ein einmaliges Überqueren der Auftragsvorrichtung des perforierten Bereiches 131. Es kann aber auch zurückgefahren werden. Der genaue Auftrag ergibt sich einerseits durch das Eigengewicht der Auftragsvorrichtung 1 auf der Siebschablone, indem die Bodenplatte 11 auf der Schablone dichtend aufliegt und somit nur den Schlitzbereich als Durchtritt zuläßt. Andererseits ergibt sich die genaue Führung durch die Führungsleisten 50 und die an den Armen 311 angeordneten, die Führung gewährleistenden Rollen 211, die sich an den einander zugekehrten Führungsleisten 50 abstützen.

Die Bewegung kann, wie bereits erwähnt, von Hand oder maschinell erfolgen. Um die Bewegung von Hand zu ermöglichen, sind Handgriffe 411 an der Bodenplatte befestigt.

Der Vorteil dieser Vorrichtung ist darin zu sehen, daß kein Farbtümpel irgendwo freisteht. Befindet sich die Auftragsvorrichtung auf nichtdurchlässigen Flächen, so erfolgt auch kein Austritt von verschäumter Flotte.

Die Druckeinstellung kann beliebig gewählt werden. So kann einen Druck von 0,5 bar bis beispielsweise 3 bar wählen, aber auch den Druck niedriger oder höher einstellen. Wesentlich ist es, daß der Druck überhaupt exakt einstellbar ist. Ob nun mehr oder weniger verschäumte Flotte im Inneren des Hohlkörpers 1 liegt, ist dabei gleichgültig, der in der Luftblase 6 vorhandene Druck wirkt sich auf das Gesamtsystem aus.

In Fig. 1 ist die Gesamtanordnung in der Seitenansicht gut zu sehen mit dem Druckluftanschluß und der Druckluftleitung zum Deckel, was aber noch besser in Fig. 3 zu sehen ist. In Fig. 1 ist der Deckel einmal in abgenommener Form strichpunktiert angedeutet. Der Hohlkörper 10 bildet somit den Schaumbehälter, indem die Füllkörper 112 die Schrägflächen 12 bilden.

In Fig. 2 ist die Wirkungsweise der Vorrichtung durch die gezeigte Draufsicht gut ersichtlich und die Möglichkeit des Hin- und Herfahrens der Auftragsvorrichtung 1. Ferner ist ersichtlich, daß die Möglichkeit gegeben ist, am Arbeitstisch 5 Nadelleisten 51 zum Festhalten der Ware vorzusehen.

In Fig. 3 ist die Gesamtanordnung veranschaulicht mit der Lagerung der Schablone mit Rahmen 30 auf der Ware, die wiederum auf dem Arbeitstisch 5 liegt und der Anordnung der Auftragsvorrichtung 1 auf der Schablonengaze im Inneren der Schablone.

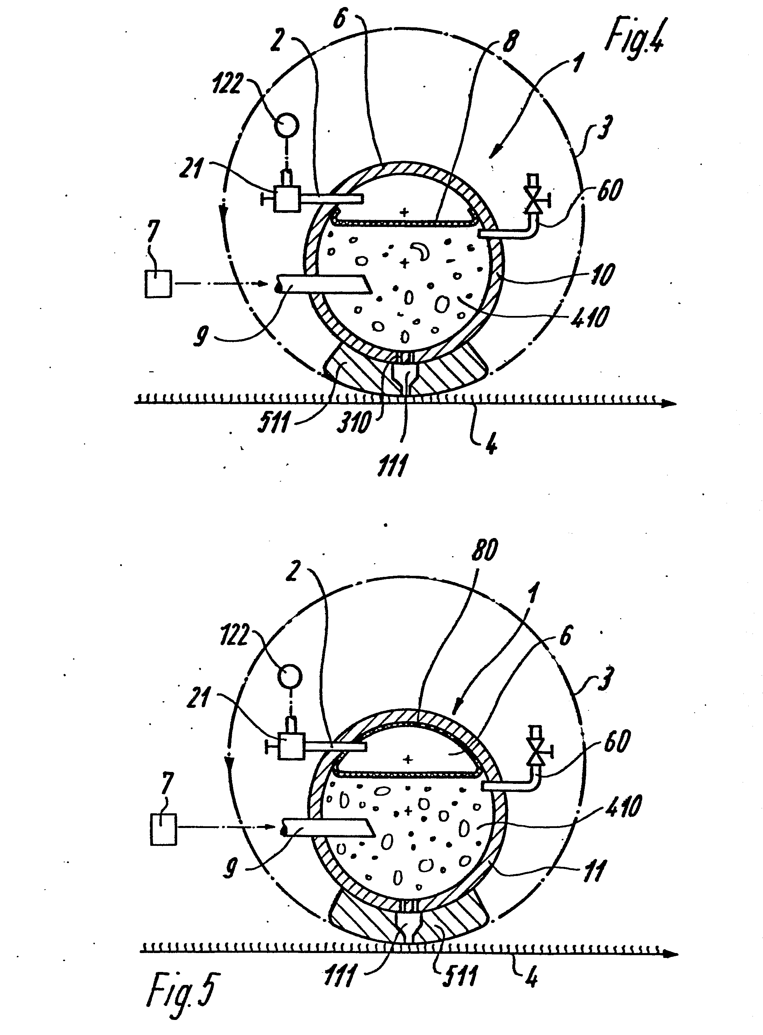

In den Fig. 4, 5 und 6 sind rotierende Systeme gezeigt, die Auftragsvorrichtung 1 befindet sich hierbei in rotierenden Siebschablonen 3, die Zylinderschablonen sein können. Die Ware 4 ist angedeutet. Die Auftragsvorrichtung besteht bei diesen Ausführungsbeispielen aus sich über die Arbeitsbreite erstreckenden Rohren als Hohlkörper 10, die bei diesen Ausführungsbeispielen horizontal liegen und nicht vertikal stehen.

In den Figuren ist gezeigt, daß der Auftragsschlitz 111 jeweils von einem Rakelschuh 511 gebildet werden kann, wobei Durchtrittsquerschnitte 310 in der Wandung des Hohlkörpers 10 vorgesehen sein können.

Von einem beliebigen regel- und/oder steuerbarem Schaumgenerator 7 kommend, der in den Zeichnungen nur angedeutet ist, wird der Schaum von der Seite oder von der Stirnseite her, das muß freigestellt werden, in den Innenraum 410 des Hohlkörpers 10 gefördert.

Auch hierbei schließt bei Füllung das verschäumte Medium die Austrittsquerschnitte nach unten ab, wodurch die Luft in der Auftragsvorrichtung 1 komprimiert wird.

Beim Ausführungsbeispiel der Fig. 4 liegt im oberen Bereich eine Membran 8 und beim Ausführungsbeispiel der Fig. 5 ein Schlauch 80. Beide elastischen Teile erstrecken sich über das Arbeitsgebiet und in ihrem Inneren oder oberhalb der Membran 8 bildet sich die Luftblase 6. Diese bildet sich aber in diesem Fall nicht von selbst, sondern es muß Druckluft zugeführt werden über die Druckluftleitung 2 und die nur angedeutete Druckluftbetriebseinheit 21. In der Druckluftbetriebseinheit 21 wird wieder die bar-Zahl eingestellt, beispielsweise über ein Reduzierventil. Die Meßvorrichtung 122 ist ebenfalls nur angedeutet. Somit liegt in der Luftblase 6 ein bestimmter Druck, der sich auf das Innere der Auftragsvorrichtung 1 auswirkt und der auf dem Schaum bzw. auf dem verschäumten Medium liegt. Vor Beginn der Arbeit ist es noch notwendig, den Innenraum 410 zu entlüften durch eine Entlüftungsvorrichtung 60. Hat die Oberfläche des Schaumes die Unterseite der Membran 8 bzw. des Schlauches 80 erreicht, kann die Entlüftungsvorrichtung 60 geschlossen werden und das System arbeitet automatisch. Dabei arbeitet die Druckluftbetriebseinheit mit dem Schaumgenerator 7 zusammen. Fördert die Pumpe des Schaumgenerators, die nicht dargestellt ist, zu viel Schaum, erhöht sich der Druck in der Luftblase 6, die dann als Feder wirkt.

Das verschäumte Medium braucht nicht unbedingt vom Schaumgenerator her zu kommen, es kann von einem Vorratsbehälter herkommen, der mit einer Pumpe versehen ist od.dgl. Das dargestellte Ausführungsbeispiel ist nur als Beispiel zu verstehen.

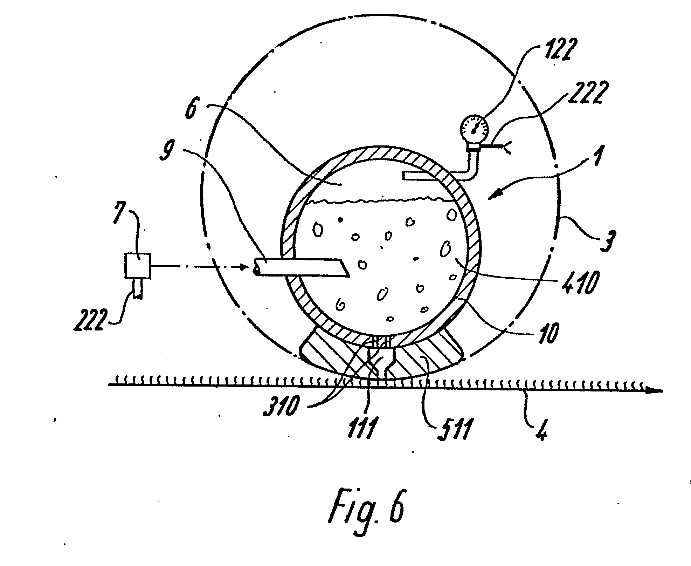

In Fig. 6 ist ein Ausführungsbeispiel gezeigt, bei dem nicht separat Druckluft zugegeben wird, sondern die Druckluft dadurch entsteht, daß Schaum in der angegebenen Pfeilrichtung über die Schaumzuleitung 9 eingefördert wird. Dadurch komprimiert sich die Luft im oberen Bereich und es entsteht wieder die Luftblase 6, deren Druck an der Meßvorrichtung 122 ablesbar ist. Die Meßvorrichtung kann wiederum mit der Schaumgeneratorpumpe od.dgl. gekuppelt sein, so daß bei Erreichen eines bestimmten Druckes die Pumpe langsamer fördert bzw. bei Nichterreichen eines bestimmten Druckes rascher fördert. Da kontinuierlich gearbeitet wird, wird auch kontinuierlich Flotte, und zwar verschäumte Flotte verbraucht. Die genaue Einstellung des Druckes in der Luftblase 6 ist somit bei entsprechenden Druckversuchen ein einmaliger Arbeitsvorgang, wonach sich dann das System automatisch selbst stabil hält.

Für den Schaumauftrag ist es sehr wichtig, daß der Schaum mit gleichmäßigem Druck durch die Austrittsquerschnitte, vorzugsweise den Auftragsschlitz 111 auf die Ware gelangt und daß dieser einmal gegebene vorgewählte Druck während der Gesamtarbeit der Vorrichtung eingehalten wird.

Statt Luft kann jedes andere gasförmige, unter regelbarem Druck stehende Medium verwendet werden. Die gewählten Begriffe sind nicht einschränkend zu verstehen. So ist nicht nur Luft zuführbar, sondern jedes beliebige andere Gas. Der Hohlkörper kann behälterartig ausgebildetsein und die Leitungen 222 zwischen einer Meßvorrichtung 122 und der Fördervorrichtung für das verschäumte Medium können beliebig durch irgendwelche Regelvorrichtungen ersetzt werden.

Wesentlich ist, daß der Hohlkörper dichtend abgeschlossen ist oder abschließbar ist und daß die Luftblase entweder aktiv den Schaum aus dem Hohlkörper heraustreibt oder als Regulativ dient zur Beeinflussung der Schaumförderung.

Der Schaum soll unter kontrolliertem Druck aus dem Auftragsschlitz herausgedrückt werden und es soll ein gleichmäßiger Auftrag des Schaumes erzielt werden.

9/5

P a t e n t a n s p r ü c h e
===================================

1. Auftragsvorrichtung für verschäumte Auftragsmedien im
   Inneren oder auf einer Schablone od.dgl., bestehend aus
   einem geschlossenen Hohlkörper, schlitzartig zur Auftragsebene geöffnet, d a d u r c h  g e k e n n z e i c h -
   n e t., daß der Hohlkörper (10) dichtend abgeschlossen
   ist zur Bildung einer unter Druck stehenden Luftblase (6),
   aus der sich im Inneren der Auftragsvorrichtung (1) befindlichen Luft und/oder zugeführten Luft.

2. Auftragsvorrichtung nach Anspruch 1, dadurch gekennzeichnet, daß der Hohlkörper (10) mit einem gasförmigen, unter
   regelbarem Druck stehenden Medium in Verbindung steht.

3. Auftragsvorrichtung nach Anspruch 1, dadurch gekennzeichnet, daß sich im Inneren des Hohlkörpers (10) eine geschlossene, mit einem unter Druck stehenden gasförmigen
   Medium gefüllte Luftblase (6) od.dgl. befindet.

4. Auftragsvorrichtung nach Anspruch 1, dadurch gekennzeichnet, daß der Hohlkörper als Rohr oder rohrartiger Zylinder
   ausgebildet ist, der in seinem unteren Bereich einen in
   einer Bodenplatte (11) bzw. Rakelschuh (511) angeordneten
   Auftragsschlitz (111) trägt und in den oberen Bereich mit
   einstellbarem Druck Druckluft od.dgl. einführbar ist.

5. Auftragsvorrichtung nach Anspruch 1 und 4, dadurch gekennzeichnet, daß der Hohlkörper (10) als vertikalstehender
Zylinder od.dgl. ausgebildet ist, der von oben mit dem
verschäumten Auftragsmedium füllbar ist und Verschließvorrichtungen vorgesehen sind zum Abschluß des oberen
Bereiches und Zuführung von Druckluft od.dgl.

6. Vorrichtung nach Anspruch 1 und einem der nachfolgenden
Ansprüche, dadurch gekennzeichnet, daß die gesamte Auftragsvorrichtung (1) mit abgedichtetem Hohlkörper (10) und
Auftragsschlitz (111) beweglich gelagert ist.

7. Auftragsvorrichtung nach Anspruch 1 und einem der nachfolgenden Ansprüche, dadurch gekennzeichnet, daß im Inneren
des Hohlkörpers (10) eine Membran (8) bzw. ein
Schlauch (80) angeordnet ist, der die Blase bzw. Luftblase
(6) abschließt und mit der Druckluftleitung (2) od.dgl.
verbunden ist.

8. Auftragsvorrichtung nach Anspruch 1 und einem der nachfolgenden Ansprüche, dadurch gekennzeichnet, daß in der
Druckluftbetriebseinheit ein Reduzierventil und eine Meßvorrichtung (122) vorgesehen ist.

9. Auftragsvorrichtung nach Anspruch 7, dadurch gekennzeichnet, daß unterhalb der Membran (8) bzw. dem Schlauch (80)
ein Entlüftungsventil bzw. eine Entlüftungsvorrichtung (60)
vorgesehen ist.

10. Auftragsvorrichtung nach Anspruch 1 und einem der nachfolgenden Ansprüche, dadurch gekennzeichnet, daß bei Bildung
einer Luftblase (6) aus der sich im Inneren der Auftragsvorrichtung (1) befindlichen Luft eine Meßvorrichtung (122) im
Bereich der Luftblase angeordnet ist, die über Leitungen (222)
mit dem Schaumgenerator, dem Schaumerzeuger bzw. der entsprechenden Pumpe (7) verbunden ist.

Fig. 1

2/5

0100886

Miller

Fig.2

Mitter

Fig.3

0100886

Mitter

Fig.4

Fig.5

Fig. 6

**Europäisches Patentamt**

**EUROPÄISCHER RECHERCHENBERICHT**

**0100886**
Nummer der Anmeldung

EP 83 10 6712

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 540 288 (TEXTILANA) * Insgesamt, insbesondere Figuren 1,2, Seite 12, Zeilen 1-11 * | 1-3 | D 06 B 19/00 |
| A | FR-A-2 053 288 (BLEICHE) | | |
| A | US-A-3 865 078 (DU PONT DE NEMOURS) | | |
| A,D | DE-A-3 034 804 (MITTER) | | |

**RECHERCHIERTE SACHGEBIETE (Int. Cl. ³)**

D 06 B
D 06 N
D 06 P

Der vorliegende Recherchenbericht wurde für alle Patentansprüche erstellt.

| Recherchenort | Abschlußdatum der Recherche | Prüfer |
|---|---|---|
| DEN HAAG | 28-10-1983 | PETIT J.P. |